# EUROPÄISCHE PATENTSCHRIFT

(11) **EP 0 695 573 B1**
(45) Veröffentlichungstag und Bekanntmachung des Hinweises auf die Patenterteilung: **19.08.1998**
(21) Anmeldenummer: 95108836.8
(22) Anmeldetag: 08.06.1995
(51) Int. Cl.: B01D 46/52, B01D 27/06, B01D 39/16

(54) **Patronenfilter**
Cartridge filters
Filtres à cartouches

(30) Priorität: 05.08.1994 DE 4427817
(43) Veröffentlichungstag der Anmeldung: 07.02.1996
(73) Patentinhaber: Firma Carl Freudenberg, 69469 Weinheim (DE)
(72) Erfinder: Hollingsworth, Anthony, D-69488 Birkenau (DE); Pfeuffer, Peter, D-68775 Ketsch (DE); Sievert, Jörg, Dr., D-69469 Weinheim (DE); Schroth, Thomas, D-67240 Bobenheim (DE); Rudolph, Antje, D-69517 Unterflockenbach (DE)

(56) Entgegenhaltungen:
- EP-A- 0 411 240
- EP-A- 0 498 002
- DE-A- 4 010 526
- DE-C- 3 911 826

## Beschreibung

Die Erfindung betrifft einen Patronenfilter nach dem Oberbegriff von Anspruch 1.

Ein solches Patronenfilter ist der Anmelderin von zahlreichen Filteranlagen her bekannt. Der in dem Patronenfilter enthaltene Filterkörper kann aus einer oder mehreren Schichten bestehen, die jeweils homogen aufgebaut sind. Der Filterkörper weist aufgrund seiner Plissierung eine vergleichsweise große Oberfläche auf, was einen besonders geringen Druckverlust zur Folge hat. Die Anwendung solcher Patronenfilter bewährt sich nur in der Entstaubung, wo hohe Konzentrationen (größer als 1 mg/m³) relativ groben Staubes (größer als 1 µm) vorhanden sind. Die während der bestimmungsgemäßen Verwendung aus der zur reinigenden Luft abgeschiedenen Staubpartikel sammeln sich auf der Anströmseite des Patronenfilters als Filterkuchen an. Der Filterkuchen ist entfernbar. Da die Staubkonzentration in der Zuluftfiltration in der Regel kleiner als 1 mg/m³ ist und die Zuluft große Anteile an feinen Staubpartikeln (kleiner als 0,5 µm) enthält, werden die gesamten Poren des Filtermaterials durch Tiefenfiltereffekte schnell verstopft, bevor sich ein Staubkuchen aufbauen kann. Eine befriedigende Abreinigung ist dann nicht mehr möglich. Bereits nach kurzer Gebrauchsdauer ergibt sich dadurch ein schneller Anstieg des Druckverlustes.

In bezug auf die Filtration von Gasen sind der Anmelderin auch sogenannte Tiefenfilter bekannt. Diese bestehen aus weichen Vliesstoffmatten einer Dicke von 8 bis 100 mm, die eine in Richtung der Reinluftseite kontinuierlich zunehmend verdichtete Porenstruktur haben. Die aus der zu reinigenden Luft auszuscheidenden Staubpartikel vermögen dadurch mehr oder weniger weit in das Innere der Filtermatten einzudringen, bis sie darin festgehalten werden. Der sich während der bestimmungsgemäßen Verwendung ergebende Druckabfall ist über lange Zeiträume nahezu konstant. Durch ihre große Voluminosität und Weichheit lassen sich derartige Filtermatten jedoch nicht plissieren. Die für ein Luftvolumen definierter Größe benötigten Filtermatten haben eine vergleichsweise große Anströmfläche, was es erforderlich macht, besonders große Aggregate für ihren Einbau zur Verfügung zu stellen. Eine Abreinigung ist nicht möglich. Tiefenfilter gelangen aus diesem Grund in erster Linie bei der Zuluftfiltration von Klimaanlagen zur Anwendung.

EP 0 411 240 A1 beschreibt einen Filtereinsatz für luftansaugende Maschinen, bestehend aus einem Filterring, der aus zickzackförmig gefaltetem Filterpapier besteht. Der Filterring ist radial durchströmt, außerdem ist ein weiteres Filterelement innerhalb des Filterrings angeordnet, welches einen Vliesmantel darstellt, der aus einem Kunstfaservlies besteht und mit einem als Haftmittel wirkenden Öl versehen ist. Durch diese Ausgestaltung soll die Aufgabe gelöst werden, bei möglichst geringem Platzbedarf und unter Vermeidung einer zu starken Erhöhung des Durchflußwiderstandes, besonders den Anfangsabscheidungsgrad eines Filtereinsatzes zu verbessern. Die Dicke des Vliesmantels beträgt das Zwei- bis Achtfache der Dicke des Filterpapiers.

Der Erfindung liegt die Teilaufgabe zugrunde, ein plissiertes Patronenfilter zu zeigen, das sich von den bisher bekannten Ausführungen durch einen über lange Zeiträume weitgehend unveränderlichen Druckabfall unterscheidet und das für eine Verwendung im Bereich der Zuluftfiltration geeignet ist.

Diese Aufgabe wird erfindungsgemäß durch die kennzeichnenden Merkmale von Anspruch 1 gelöst. Auf vorteilhafte Ausgestaltung nehmen die Unteransprüche Bezug.

Bei dem erfindungsgemäßen Patronenfilter ist es vorgesehen, daß der Vliesstoff bei einem Flächengewicht von 100 - 500 g/m² eine Gesamtdicke, gemessen nach DIN 53855, von 1,5 bis 6,0 mm hat. Die DIN 53855 beschreibt die Art der Ermittlung der Dicke von textilen Flächengebilden. Diese sind kompressibel, wodurch es erforderlich ist, besondere Randbedingungen bei der Durchführung der Messung zu beachten. Der erfindungsgemäß zur Anwendung gelangende Vliesstoff umfaßt schichtweise zusammengelagerte Stapelfasern eines Titers von 0,1 bis 50 dtex, die durch ein thermisch erweichtes Bindemittel verklebt sind, wobei im Vliesstoff die abströmseitige Unterschicht bei einer Dicke von 10 bis 45 % der Gesamtdicke zwei bis zehnmal so stark verdichtet ist wie die anströmseitige Oberschicht. Der Vliesstoff läßt sich hierdurch nicht nur ausgezeichnet plissieren, sondern er hat darüber hinaus die Fähigkeit, die aus der zu reinigenden Luft auszuscheidenden Staubpartikel zu separieren und über seinen ganzen Querschnitt verteilt zu speichern. Bei einer Verwendung in einem Patronenfilter gelingt es hierdurch nicht nur, über lange Zeiträume einen vergleichsweise geringen Druckabfall zu erreichen, sondern darüber hinaus auf besonders kleinem Raum eine hinsichtlich ihrer Größe bisher nicht für möglich gehaltene, aktive Filterfläche zur Verfügung zu stellen. Unter einer Plissierung im Sinne der Erfindung wird eine Faltenbildung ohne zusätzliche Unterstützungsmaßnahmen wie beispielsweise die ergänzende Verwendung eines Drahtgewebes oder eines Stützvlieses verstanden, bei der die einzelnen Falten bei einer Tiefe von 30 bis 60 mm einen größten gegenseitigen Abstand von 10 bis 25 mm haben.

Das erfindungsgemäße Patronenfilter unterscheidet sich von den gattungsgemäßen Oberflächenfiltern durch eine wesentlich verlängerte Standzeit. Es kann letztere ersetzen, ohne daß es dazu erforderlich ist, Umbauten an den verwendeten Aggregaten vorzunehmen.

In bezug auf die Herstellung des Vliesstoffes können alle bekannten Stapelfasern, die einen Titer von 0.1 - 50 dtex aufweisen, zur Anwendung gelangen. Bevorzugt werden synthetisch erzeugte Fasern. Die Verwendung von Polyesterfasern hat sich als besonders vorteilhaft bewährt. Ihr Anteil soll zumindest 60 Gew.-% des Fasergehaltes betragen.

Auch das die Fasern zusammenhaltende, thermisch erweichte Bindemittel kann in jeder bekannten Form zur Anwendung gelangen. Es gelangt bevorzugt in Gestalt von Bindefasern zur Anwendung, beispielsweise in Gestalt von Bikomonentenfasern, die einen hoch- oder unschmelzbaren Kern und einen thermisch erweichbaren Mantel haben.

In bezug auf die Herstellung eines Patronenfilters ist aus DE-C 4304036 ein in eine zylindrische Gestalt überführter, plissierter Vliesstoff bekannt, der in einer Aufnahmeeinrichtung festgelegt ist. Der bei der Herstellung des bekannten Patronenfilters verwendete Vliesstoff war stets über seinen gesamten Querschnitt in homogener Weise strukturiert. Gebräuchliche Oberflächenfiltermedien haben eine Porosität von weniger als 85 %. Ein Vliesstoff, dessen Porosität einen Wert von 90 % übersteigt und dessen Dicke größer ist als 1,5 mm, läßt sich entweder nicht oder nur sehr schwer plissieren. Er ist zumeist zu weich, um während der bestimmungsgemäßen Verwendung der anströmenden Luft den notwendigen, statischen Widerstand entgegenzusetzen. Die resultierenden, plastischen Verformungen führen dazu, daß sich die Falten aneinander legen und der Druckverlust sprunghaft ansteigt. Durch Mitplissierung von Unterstützungsmaterialien (Drahtgewebe oder Stützvlies) kann dieser Verformung entgegengewirkt werden, was jedoch mit einem erheblichen Aufwand verbunden ist.

Unter Porosität wird im Sinne der Erfindung das Hohlraumvolumen eines Vliesstoffs verstanden, bezogen auf das insgesamt von diesem eingenommene Volumen.

Der Erfindung liegt die weitere Teilaufgabe zugrunde, ein solches Verfahren derart weiterzuentwickeln, daß es gelingt, Vliesstoffe einer Dicke von mehr als 1.5 mm sowie einer Porosität von mehr als 90 % ohne Unterstützungsmaterialien zu plissieren, in eine zylindrische Gestalt zu überführen und in einer Aufnahmevorrichtung derart festzulegen, daß sich während der bestimmungsgemäßen Verwendung in einer Zuluftreinigungsanlage mit Anfangsdruckverlusten von weniger als 300 Pa bei Durchströmungsgeschwindigkeiten durch den Filtervliesstoff unterhalb 250 m³/m²h keine die Verwendbarkeit beeinträchtigenden, plastischen Verformungen ergeben.

Zur Lösung dieser weiteren Aufgabenstellung sind erfindungsgemäß die Merkmale von Anspruch 9 des Patentbegehrens vorgesehen. Auf eine vorteilhafte Ausgestaltung nimmt Anspruch 10 Bezug.

Die Erfindung wird nachfolgend anhand eines Beispieles weiter verdeutlicht:

In der in der Anlage beigefügten Zeichnung ist eine beispielhafte Filterpatrone der erfindungsgemäßen Art wiedergegeben. Diese umfaßt einen zylindrischen und parallel zu seiner Achse plissierten Filterkörper 1 aus einem geschichteten Vliesstoff, der in radialer Richtung durchströmbar ist, wobei der Vliesstoff bei einem Flächengewicht von 300 g/m² eine Gesamtdicke, gemessen nach DIN 53 855, von 3 mm hat und schichtweise zusammengelagerte Stapelfasern umfaßt, die durch ein thermisch erweichtes Bindemittel verklebt sind, wobei der Vliesstoff eine abströmseitige Unterschicht 6 aufweist, die bei einer Dicke von 30 % der Gesamtdicke fünfmal so stark verdichtet ist wie die abströmseitige Oberschicht 4.

Der Vliesstoff besteht also im Prinzip aus zwei Faserschichten 4 und 6, die eine voneinander abweichende Verdichtung haben.

Die erste Faserschicht, die im wesentlichen die Oberschicht 4 bildet, besteht aus 70 Gew.-% Polyesterfasern mit einem Titer von 3,3 dtex und 30 Gew.-% Bikomponentenfasern auf Polyesterbasis mit einem Titer von 5,5 dtex. Die zweite Faserschicht bildet im wesentlichen die Unterschicht 6. Sie besteht aus 40 Gew.-% Polyesterfasern mit einem Titer von 1,7 dtex und 60 Gew.-% Bikomponentenfasern auf Polyesterbasis mit einem Titer von 2,2 dtex. Die erste und die zweite Faserschicht haben jeweils ein Gewicht von 150 g/m². Das Gesamtgewicht ist 300 g/m².

Die beiden Lagen werden unter Verwendung eines Querlegers so aufeinandergeschichtet und anschließend mittels eines Drahtsiebes in eine Thermofusionsanlage überführt, daß die Oberschicht 4 nach oben zeigt. In der Thermofusionsanlage werden die beiden Schichten gemeinsam von oben mit Heißluft angeblasen, die eine Temperatur von 180°C hat. An der Unterseite ist eine Absaugeinrichtung angeordnet, durch die Heißluft entfernt wird.

Die erhaltene Filtermatte wird anschließend in einem separaten Arbeitsgang mit einem Bandkalander auf eine Dicke von 3 mm abgeflacht. Dabei muß die Unterschicht 6, die während der bestimmungsgemäßen Verwendung die Abströmseite der Filtermatte bildet, auf eine Temperatur von 130°C aufgeheizt werden, um die erwünschte Verdichtung nur der Unterschicht zu erhalten. Die Verweilzeit im Kalander beträgt 16 Sekunden. Die Bandrückspannung beträgt 2,5 bar.

Die Biegesteifigkeit (S) des erhaltenen Filtervliestoffes wird nach DIN 53 350 gemessen. Die DIN 53 350 beschreibt die Bestimmung der Biegesteifigkeit durch die Biegung eines einseitig eingespannten Streifens. Das Biegesteifigkeitsmoment wird bei verschiedenen Biegewinkeln gemessen. Die Biegesteifigkeit beträgt
- bei: 10° Biegewinkel: 24 N·m²
20° Biegewinkel: 37 N·m².

Die Luftdurchlässigkeit wird nach DIN 53 887 gemessen. Die DIN 53 887 dient der Beurteilung der Luftdurchlässigkeit, d. h. der Eigenschaft, bei der ein Textilmaterial, bei vorgegebenem Differenzdruck, Luft hindurchströmen läßt. Die Luftdurchlässigkeit beträgt vorliegend bei

| | | |
|---|---|---|
| | 100 Pa | 600 l/m²s. |
| Die Porosität beträgt | 92,7 %. | |

Der fertige Filtervliesstoff wird anschließend in eine Messerplissiermaschine überführt und plissiert. Die Faltentiefe beträgt 48 mm.

Anschließend werden 4 m² des plissierten Materials in eine zylindrische Gestalt überführt, wobei der Außendurchmesser 327 mm beträgt und die Länge in axialer Richtung 600 mm. Das erhaltene Gebilde wird im Bereich der beiden Stirnseiten mit einem Deckel bzw. Boden aus Kunststoff staubdicht verklebt. Die hierdurch erhaltene Filterpatrone ist unmittelbar verwendbar.

### Filtertechnische Leistung:

Bei einem Volumenstrom zu reinigender Luft von 1000 m³/h resultiert eine Anfangsdruckdifferenz von 110 Pa. Es kann problemlos benutzt werden, bis eine Enddruckdifferenz von 600 Pa erreicht ist. Das ist bei einer Verwendung in der Zuluftfiltration einer Klimaanlage normalerweise frühestens erst nach einem Jahr der Fall.

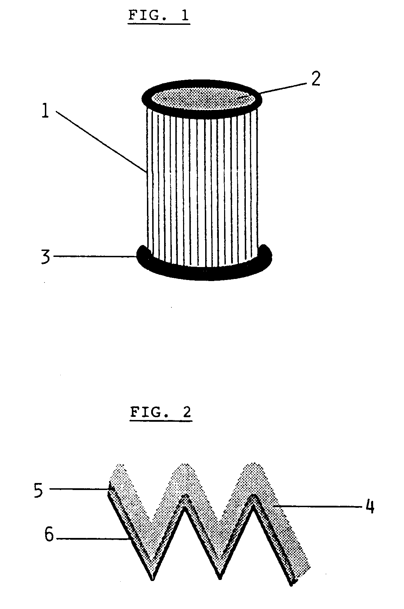

## Patentansprüche

1. Patronenfilter, umfassend einen zylindrischen und parallel zu seiner Achse plissierten Filterkörper aus einem geschichteten Vliesstoff, der in radialer Richtung durchströmbar ist, für die Anwendung in der Zuluftfiltration mit Anfangsdruckverlusten kleiner als 300 Pa bei Durchströmungsgeschwindigkeiten durch das Filtermedium unterhalb 250 m³/m² h, dadurch gekennzeichnet, daß der Vliesstoff bei einem Flächengewicht von 100 bis 500 g/m² eine Gesamtdicke, gemessen nach DIN 53 855, von 1,5 - 6,0 mm hat und schichtweise zusammengelagerte Stapelfasern eines Titers von 0,1 - 50 dtex umfaßt, die durch ein thermisch erweichtes Bindemittel verklebt sind, und daß der Vliesstoff abströmseitig eine Unterschicht aufweist, die bei einer Dicke von 10 bis 45 % der Gesamtdicke zwei- bis zehnmal so stark verdichtet ist wie die anströmseitige Oberschicht.

2. Patronenfilter nach Anspruch 1, dadurch gekennzeichnet, daß die Stapelfasern einen Titer von 0,5 bis 6 dtex haben.

3. Patronenfilter nach einem der Ansprüche 1 oder 2, dadurch gekennzeichnet, daß der Vliesstoff eine Dicke von 2,5 - 4,5 mm hat.

4. Patronenfilter nach einem der Ansprüche 1 bis 3, dadurch gekennzeichnet, daß die Unterschicht fünf- bis siebenmal so stark verdichtet ist wie die Oberschicht.

5. Patronenfilter nach einem der Ansprüche 1 bis 4, dadurch gekennzeichnet, daß die Fasern Polyesterfasern umfassen.

6. Patronenfilter nach Anspruch 5, dadurch gekennzeichnet, daß der Anteil der Polyesterfasern zumindest 60 Gew.-% beträgt.

7. Patronenfilter nach einem der Ansprüche 1 bis 6, dadurch gekennzeichnet, daß das Bindemittel in Gestalt von Bindefasern zur Anwendung gelangt.

8. Patronenfilter nach einem der Ansprüche 1 bis 6, dadurch gekennzeichnet, daß das Bindemittel in Gestalt von Bikomponentenfasern zur Anwendung gelangt.

9. Verfahren zur Herstellung eines Faltenfilters für ein Patronenfilter nach Anspruch 1 bis 8, bei dem ein schichtweise aufgebauter Vliesstoff erzeugt, plissiert, in zylindrische Gestalt überführt und in einer Aufnahmeeinrichtung festgelegt wird, dadurch gekennzeichnet, daß der Vliesstoff aus Stapelfasern und einem thermisch erweichbaren Bindemittel erzeugt und vor seiner Plissierung unter Verwendung eines Kalanders nur im Bereich der einen Seite erwärmt und verdichtet wird.

10. Verfahren zur Herstellung eines Faltenfilters für ein Patronenfilter nach Anspruch 9, dadurch gekennzeichnet, daß als Kalander ein Bandkalander zur Anwendung gelangt.

## Claims

1. A cartridge filter, comprising a cylindrical filter body pleated parallel to its axis and made from a laminated non-woven fabric, through which the flow can pass in the radial direction, for use in supply-air filtration, with initial pressure losses lower than 300 Pa at throughflow velocities through the filter medium of below 250 m³/m²h, characterized in that the non-woven fabric has, in the case of a weight per unit area of 100 to 500 g/m², a total thickness, measured according to DIN 53 855, of 1.5 - 6.0 mm and comprises staple fibres assembled in layers and having a linear density of 0.1 - 50 dtex, the said fibres being adhesively bonded by means of a thermally softened binder, and in that the non-woven fabric has, on the outflow side, a bottom layer which, having a thickness of 10 to 45% of the total thickness, is twice to ten times as highly compacted as the inflow-side top layer.

2. A cartridge filter according to claim 1, characterized in that the staple fibres have a linear density of 0.5 to 6 dtex.

3. A cartridge filter according to either of claims 1 and 2, characterized in that the non-woven fabric has a thickness of 2.5 - 4.5 mm.

4. A cartridge filter according to any of claims 1 to 3, characterized in that the bottom layer is five to seven times as highly compacted as the top layer.

5. A cartridge filter according to any of claims 1 to 4, characterized in that the fibres comprise polyester fibres.

6. A cartridge filter according to claim 5, characterized in that the proportion of polyester fibres is at least 60% by weight.

7. A cartridge filter according to any of claims 1 to 6, characterized in that the binder is used in the form of binding fibres.

8. A cartridge filter according to any of claims 1 to 6, characterized in that the binder is used in the form of bicomponent fibres.

9. A method for producing a folded filter for a cartridge filter according to any of claims 1 to 8, in which a non-woven fabric composed of layers is made, pleated, changed to a cylindrical shape and secured in a receiving device, characterized in that the non-woven fabric is made from staple fibres and a thermally softenable binder and, before being pleated, is heated and compacted solely in the region of one side by the use of a calender.

10. A method for producing a folded filter for a cartridge filter according to claim 9, characterized in that the calender used is a belt calender.

## Revendications

1. Filtre à cartouches comprenant un corps de filtre cylindrique plissé de manière parallèle par rapport à son axe et formé par une étoffe non-tissée en couches à travers laquelle un écoulement est possible dans la direction radiale, destiné à être utilisé dans le filtrage de l'air amené avec des pertes de pression initiale inférieures à 300 Pa pour des vitesses d'écoulement à travers le milieu filtrant inférieures à 250 m³/m²h, caractérisé en ce que l'étoffe non-tissée a une épaisseur totale de 1,5-6,0 mm, mesurée selon la norme DIN 53 855, pour un grammage allant de 100 à 500g/m², et comprend des fibres coupées ayant un titre de 0,1-50 dtex associées en couches et qui sont collées par un liant ramolli par la chaleur, et en ce que l'étoffe non-tissée est pourvue, sur le côté d'écoulement, d'une couche inférieure qui pour une épaisseur de 10 à 45% de l'épaisseur totale est comprimée deux à dix fois plus fortement que la couche supérieure située sur le côté d'affluence.

2. Filtre à cartouches selon la revendication 1, caractérisé en ce que les fibres coupées ont un titre allant de 0,5 à 6 dtex.

3. Filtre à cartouches selon l'une des revendications 1 ou 2, caractérisé en ce que l'étoffe non-tissée a une épaisseur de 2,5-4,5 mm.

4. Filtre à cartouches selon l'une des revendications 1 à 3, caractérisé en ce que la couche inférieure est comprimée cinq à sept fois plus fortement que la couche supérieure.

5. Filtre à cartouches selon l'une des revendications 1 à 4, caractérisé en ce que les fibres comprennent des fibres de polyester.

6. Filtre à cartouches selon la revendication 5, caractérisé en ce que la proportion des fibres de polyester est égale à au moins 60% en poids.

7. Filtre à cartouches selon l'une des revendications 1 à 6, caractérisé en ce que le liant utilisé se présente sous la forme de fibres liantes.

8. Filtre à cartouches selon l'une des revendications 1 à 6, caractérisé en ce que le liant utilisé se présente sous la forme de fibres à deux composants.

9. Procédé de fabrication d'un filtre à plis pour un filtre à cartouches selon les revendications 1 à 8, dans lequel on produit une étoffe non-tissée structurée en couches, on la plisse, on lui donne une forme cylindrique et on la fixe dans un dispositif de réception, caractérisé en ce que l'étoffe non-tissée est produite à partir de fibres coupées et d'un liant ramollissable par la chaleur et est réchauffée et comprimée seulement dans la région de l'un de ses côtés en utilisant une calandre avant d'être plissée.

10. Procédé de fabrication d'un filtre à plis pour un filtre à cartouches selon la revendication 9, caractérisé en ce que l'on utilise, en tant que calandre, une calandre à bande.
